# EUROPEAN PATENT APPLICATION

(11) **EP 1 583 355 A1**
(43) Date of publication of application: **05.10.2005**
(21) Application number: 03780183.4
(22) Date of filing: 15.12.2003
(51) Int. Cl.: H04N 5/268

(54) **DEVICE WHICH IS USED TO ROUTE DATA FLOWS FROM VARIOUS MPEG (MOTION PICTURE EXPERT GROUP) TRANSFER DEVICES TOWARDS ONE OR MORE ASSOCIATED DEVICES**

(30) Priority: 16.12.2002 ES 200202885
(71) Applicant: Semiconductores Investigacion Y Diseno S.A. -(SIDSA), 28760 Madrid (ES)
(72) Inventor: ISENSER FARRE, Jose Maria, Calle Isaac Newton, E-28760 Madrid (ES); SANTOS PEREZ, Carlos, Calle Isaac Newton, E-28760 Madrid (ES); AVELLANO FERNANDEZ, Jose, Luis, Calle Isaac Newton, E-28760 Madrid (ES); MORAN CARRERA, Javier, Calle Isaac Newton, E-28760 Madrid (ES)
(74) Representative: Kritzenberger & Zeuner
(86) International application number: PCT/ES2003/000634
(87) International publication number: WO 2004/056092

(57) **Abstract**

The invention relates to device or matrix which can be used indiscriminately and intelligently to direct data flows (1) generated by various sources (2) towards one or more destination devices (3) the latter forming sources of new data flows, in a common interface environment (4). According to the invention, (i) source (2) refers to a tuner or another data transfer device capable of generating an MPEG-2 (Motion Picture Expert Group) data flow and compatibles, and (ii) destination device (3) refers to removable or integrated devices (5) without the system, which are capable of filtering, transforming or regenerating the contents of the original incoming flow, or devices which receive the resulting data flows (6). The purpose of the invention is to enable the indiscriminate routing of data from different sources (2) through the filtering modules (5) within one system (4), such that more than one application associated with the system can be handled simultaneously. The invention is suitable for digital video/television reception systems and video recording and display equipment.

## Description

### Purpose of the Invention

The invention is an electronic device for routing data from more than one tuner or transfer device of MPEG (Motion Picture Expert Group) data to any of its receivers, redirecting the data flow through the common interface modules that act as filters, transformers or regenerators of data sent on the transport streams.

This device would be integrated with a reception system for digital television networks (by satellite, ground or cable) based on the digital video broadcast (DVB) standard and common interface (DVB-CI), Standard DBV-Cl EN50221, as well as local network distribution and video recording (PVR).

The invention, typically, comprises various accesses to the transfer network, two or more common processing/filtering interface modules (whether or not removable) and one or more receivers capable of extracting the information from the frame and decoding it. All of this would be controlled by a processor and a common interface controller.

Once started, the electronic routing device or matrix becomes responsible for routing the data flow from network accesses to decoders or other transfer devices, isolating the common interface modules.

If a new module is introduced to the system, the processor must detect whether [said module] complies with the common interface specifications and must route the data flow, according to the application, through itself. The introduction or removal of module will produce changes in the routing matrix to:
a) always keep the transfer flow stable (the path cannot be broken at any time)
b) change data routing according to changing requirements of the application and of the end user

When modules are removed or disabled, the routing matrix automatically cancels that route, isolating the open path and diverting the data flow to the next programmed output. The introduction or enabling of new modules would not entail any change in the routing matrix. In no case may the data flow sequence allow the series of modules to exchange its pre-established position.

### State of the Technology

Currently, decoding systems are based on a single flow of data from an MPEG transport stream or source, which is guided through one or more common interface modules (DVB-Cl) on a strictly sequential basis, where the data that they carry are processed and/or transformed. Through this series of modules (removable or integrated), the resulting data flow is introduced to other devices responsible for breaking down its contents and decoding it for storage or display. The order in which the data flow travels the series of common interface modules is inconsequential (according to the common interface standards) although, for reasons of priority or application, the exchange thereof has already been studied, as shown in earlier patents (PCT/FR99/01447).

The device invented uses more than one tuner or other data transfer device, which makes it possible to simultaneously record and view more than one video, audio and/or data sequence not contained in a single transport stream. Likewise, in a single transport stream, it may be necessary to perform different (mutually exclusive) transformations in order to filter the information it carries according to its destination (parental control, different access providers, etc.).

The current solution to these applications is based on having two decoding devices, with one for one application (e.g., viewing) and the second for another (e.g., recording). However, using a single routing matrix allows: a) a decrease in costs, since the reception system does not have to be duplicated to access more than one application; b) an increase in features and flexibility in using common interface modules since outside intervention is not required to change from one flow to another (note that, in the case of two reception systems, the removable modules must be physically moved from the connection bay of one device to the other); and c) remove two or more filtered flows through different modules from a single data transport stream flow for the purpose of end user customization.

### Explanation of Figures

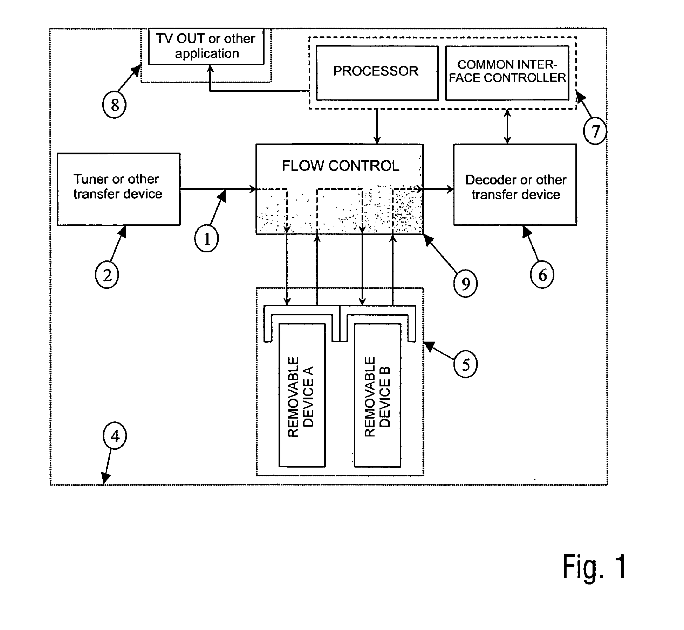

Figure 1 represents the state of the technology: a digital television reception system (4) comprising digital TV network access (2) that generates the transport stream (1), one or more bays for removable or integrated modules (5) capable of filtering, transforming or regenerating data, a receiving/processing device (6) that extracts or interprets the data flow and a central processor (7) that controls the entire system and generates the data for the final application (8). The transfer flow from the network access is modified by Device A (if one exists), may subsequently be filtered again by Device B (if one exists) and finally reach its destination, where it is extracted and the data is handled.

### Description Of How the Invention Was Made

The invention comprises, typically, of various means of accessing the transport stream, two or more common processing/filtering interface modules (whether or not removable) and one or more receivers capable of extracting the information from the frame and decoding it. All of this would be controlled by a processor and a common interface controller.

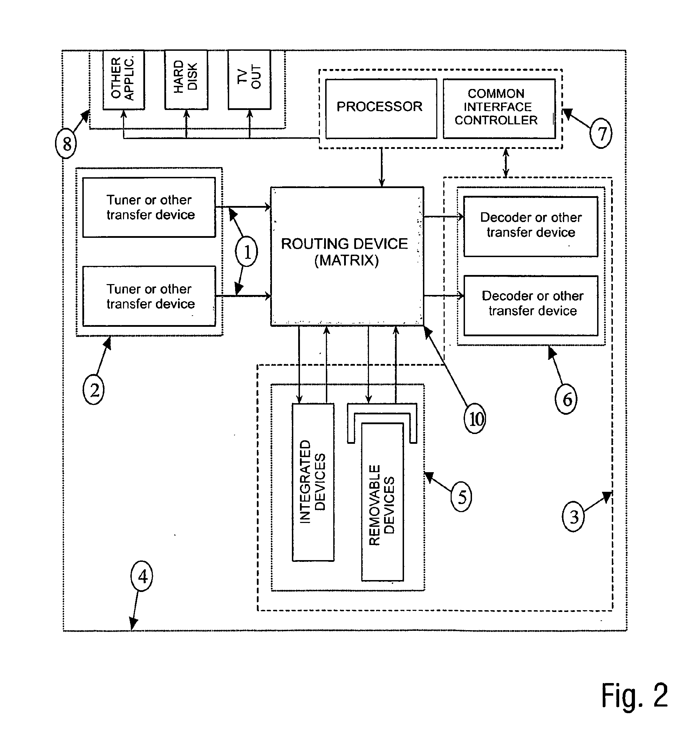

Figure 2 represents the proposed architecture into which the invention would be integrated: a digital TV reception system (4) consisting of two network accesses (2) that generate two different transfer flows (1), two or more bays for removable or integrated modules (5) capable of filtering, transforming or regenerating the data, two receiving/processing devices (6) that extract and interpret each data flow, and a central processor (7) that controls the entire system and generates the data for two or more final applications simultaneously (8). The transfer flows coming from the network access and the routing matrix (10) would guide each flow independently through one or both devices or through neither of them and, finally, reach their destination where their information is extracted and handled.

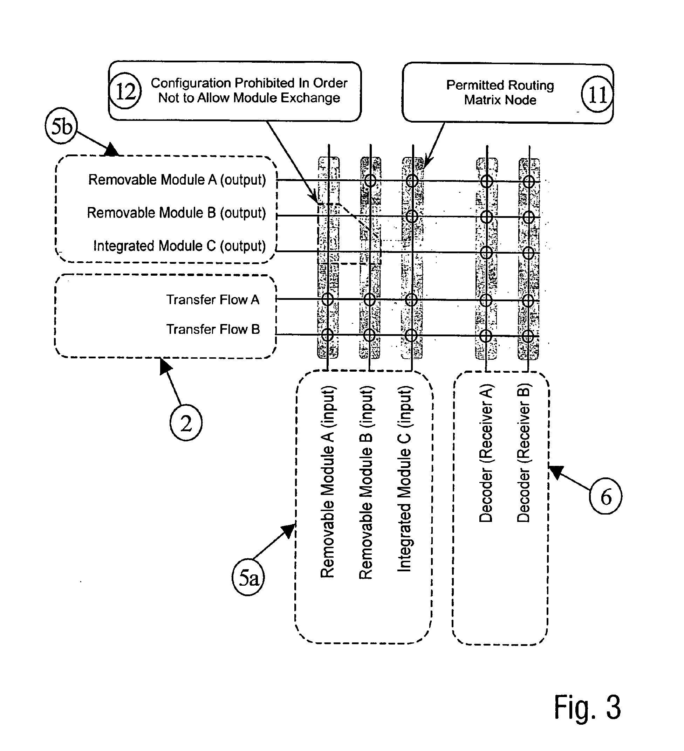

Figure 3 represents the cross-connection solution offered by the invention when there are two sources, three modules and two receivers/processors: the horizontal lines signify inputs into the matrix, the vertical lines are routed outputs from the matrix, and all crosses marked with circles (11) are possible routes. Transfer flows (2) can be routed to each of the modules (5a) or directly to the receivers (6). Once the transport stream has been filtered, the module (5b) outputs can be routed to other modules (5a) or to the receivers (6). In no case may module outputs be routed to other modules before the pre-established sequence (12).

## Claims

1. Electronic device or matrix integrated into a reception system for digital television networks (satellite, ground or cable) **characterized** because the MPEG (Motion Picture Expert Group) data flows are managed by a central processor and a common interface controller so that the data from various sources (MPEG data transport streams) can be routed intelligently and indistinctly to one or more reception devices, with said data flow being redirected through common interface modules that may act as filters, transformers or regenerators of the data.
